# EUROPÄISCHE PATENTSCHRIFT

(11) **EP 0 358 082 B1**
(45) Veröffentlichungstag und Bekanntmachung des Hinweises auf die Patenterteilung: **21.07.1993**
(21) Anmeldenummer: 89115872.7
(22) Anmeldetag: 29.08.1989
(51) Int. Cl.: H01B 3/44

(54) **Elektrische Kabel, die Isolierungen auf Basis von Ethylenpolymerisaten mit hoher Widerstandsfähigkeit gegenüber der Bildung von Wasserbäumchen enthalten**
Electrical cables containing insulations based on ethylene polymers which are highly resistant to water-treeing
Câbles électriques contenant des isolants à base de polymères d'éthylène qui ont une résistance élevée à la formation d'arborescences

(30) Priorität: 03.09.1988 DE 3830008
(43) Veröffentlichungstag der Anmeldung: 14.03.1990
(73) Patentinhaber: BASF Aktiengesellschaft, 67063 Ludwigshafen (DE)
(72) Erfinder: Koehnlein, Ernst, Dr., D-6700 Ludwigshafen (DE); Vogt, Heinz, Dr., D-6700 Ludwigshafen (DE); Schlag, Johannes, Dr., D-6700 Ludwigshafen (DE); Mühlenbernd, Thomas, Dr., D-6900 Heidelberg (DE); Hub, Hans-Henning, Dr., D-6520 Worms (DE)

(56) Entgegenhaltungen:
- EP-A- 0 248 148
- US-A- 3 404 134
- CHEMICAL ABSTRACTS, Band 100, Nr. 10, 5. März 1984, Seite 56, Zusammenfassung Nr. 69546h, Columbus, Ohio, US; & JP-A-58 152 303 (NIPPON UNICAR CO. LTD) 09-09-1983
- DATABASE WPIL, AN-Nr. 84-051510, Derwent Publication Ltd, London, GB; & JP-A-59 008 742 (FURUKAWA ELECTRIC CO.) 18-01-1984
- CHEMICAL ABSTRACTS, Band 96, Nr. 20, 17. Mai 1982, Seite 32, Zusammenfassung Nr. 163610v, Columbus, Ohio, US; T. SASAKI et al.: "Suppression of discharge breakdown of polyethylene insulation during electron beam irradiation to power cable", & RADIAT. PHYS. CHEM. Band 18, Nr. 5-6, Seiten 847-852

## Beschreibung

Die Erfindung betrifft elektrische Kabel, enthaltend eine Kabelisolierung mit hoher Widerstandsfähigkeit gegenüber dem Entstehen oder dem Wachstum von Wasserbäumchen (water trees) und mit hoher Alterungsbeständigkeit bestehend aus einem Ethylenpolymerisat (I) und 0,5 bis 20 Gew.%, bezogen auf das Ethylenpolymerisat (I), eines von (I) unterschiedlichen Ethylencopolymerisats (II), das neben überwiegenden Mengen Ethylen eine C₃- bis C₆-Alkencarbonsäure oder eine C₄- bis C₈-Alkendicarbonsäure bzw. ein -dicarbonsäureanhydrid einpolymerisiert enthält und üblichen Zusatzstoffen in üblichen Mengen.

Bei derartigen Isolierungen für elektrische Kabel und Leitungen aus Ethylenpolymerisaten können sich bei gleichzeitiger Einwirkung von hohen elektrischen Feldstärken und Feuchtigkeit die sogenannten Wasserbäumchen (Watertrees) ausbilden, die als Schwächung der Isolierung angesehen werden und deshalb durch geeignete Zusätze vermieden werden müssen.

Es gibt zahlreiche Vorschläge zur Vermeidung bzw. Verminderung der Gefahr von Wasserbäumchen, welche die Zusammensetzung bzw. die Zugabe von Verzögerer gegen die Bildung von Wasserbäumchen betreffen.

So ist es aus der DE-A-29 48 492 bekannt, das für Kabelisolierungen vorgesehene Polyolefinmaterial nach der Granulierung und unmittelbar vor der Extrusion mit reinem Wasser zu waschen, um die die Wasserbäumchen verursachenden geringen Mengen wasserlöslicher und hygroskopischer Salze zu entfernen (vgl. auch DE-A-29 11 756). Nachteilig bei diesem bekannten Verfahren ist der verhaltnismäßig große Verfahrensaufwand, denn die Granulate müssen nach dem Waschvorgang mit Heißluft getrocknet werden.

Es ist auch bereits beschrieben, dem Polyolefinkabelmaterial vor seiner Herstellung sog. Wasserbäumchen-Inhibitoren zuzusetzen, die sich von polymeren Materialien ableiten. So werden für diesen Zweck in der Literatur empfohlen: Organopolysiloxane (vgl. US-A-4 492 647, 4 536 530 und EP-A-109 797), Polyethylenglykole (vgl. EP-A-57 604), Epoxidharze (vgl. Chem. Abstr. 96: 182235), Ethylen-1-Buten- oder -1-Hexen-Copolymere (vgl. Chem. Abstr. 101:193825), Polypropylen (vgl. Chem. Abstr. 102:8329), Poly-1-buten (vgl. Chem. Abstr. 98:5097), Ethylen-Vinylacetat-Copolymerisat (vgl. Chem. Abstr. 93: 169329) Polystyrol und Triallylisocyanurat (vgl. DD-A-160 808) mit Styrol gepfropftes Ethylen-Vinylacetat- oder Ethylen-Alkylacrylat-Copolymerisat (vgl. Chem. Abstr. 103:7802), Polyvinylalkohol (vgl. Chem. Abstr. 95:204983), chlorsulfoniertes Polyethylen (vgl. Chem. Abstr. 95:204981), Polyamid (vgl. Chem. Abstr. 96:21007) Ethylen-Ethylacrylat-Copolymerisat (vgl. Chem. Abstr. 99:177160) oder ein Styrolcopolymerisat, z.B. Styrol-Butadien- oder Styrol-Isopren-Kautschuk (vgl. Chem. Abstr. 92:7572).

Bei den oben beschriebenen bekannten Polyolefinkabelmaterialien mit Zusätzen von polymeren Wasserbäumchen-Inhibitoren sind die Effekte und die Beeinflussung des Wasserbäumchenwachstums sehr unterschiedlich, quantitative Aussagen fehlen in den meisten Fällen. In vielen Fällen wirken sich die Zusätze negativ auf die Homogenität des Polyolefin-Kabelmaterials und nachteilig auf die Alterungsbeständigkeit des Isoliermaterials aus.

Es ist auch bereits bekannt, gegen elektrische Beanspruchung stabilisiertes Isoliermaterial auf Basis von Polyolefinen und Copolymerisaten des Ethylen mit Vinylacetat zu verwenden, wobei das Polyolefin aus einem Ethylen-Alkylacrylat- oder Ethylen-Acrylsäure-Copolymerisat bestehen kann (vgl. US-A-4 092 488). Derartige Mischungen aus Ethylenpolymerisaten weisen den Nachteil auf, daß entweder eine ungenügende Resistenz gegenüber der Ausbildung und dem Wachstum von Wasserbäumchen erzielt wird oder die Menge der Ester- bzw. Säuregruppen so hoch gewählt werden muß, daß die dielektrischen Verluste der Massen unzulässig erhöht werden.

In der EP-A-0 248 148 sind Kabelisolierungen mit hoher Widerstandsfähigkeit gegenüber dem Entstehen von Wasserbäumchen beschrieben, die aus einem Gemisch zweier Ethylenpolymerisate bestehen, wobei das eine Ethylenpolymerisat Polyethylen sein kann und das zweite Polymerisat ein Terpolymerisat aus Ethylen, Acrylsäureester und Acrylsäure ist. Derartige Polyolefinkabelmaterialien weisen aber noch den Nachteil auf, daß ihre mechanische Festigkeit niedriger und daß ihre Haftung auf anderen z.B. leitfähigen Schichten der Kabelisolierung, jeweils verglichen mit den erfindungsgemäßen Materialien, hoher ist. Insbesondere letztere Eigenschaft erschwert die Handhabung bei Arbeiten bei der Herstellung von Anschlüssen und Verbindungen. Zudem muß der Gehalt an Comonomeren in der Gesamtmischung, verglichen mit den erfindungsgemäßen Polymeren, höher sein, wenn der gewünschte Effekt der Inhibierung des Entstehens und Wachsens von Wasserbäumchen erzielt werden soll.

Zur Vermeidung dieser Nachteile ist in der europäischen Patentanmeldung 88120670.0 vorgeschlagen worden, einen Teil der Carboxylgruppen bzw. Carbonsäureanhydridgruppen des Ethylencopolymerisats (II) der eingangs beschriebenen Mischung zu Metallsalzen mit Metallen der 1. oder 2. Gruppe des Periodensystems umzusetzen. Derartige Mischungen weisen aber noch den Nachteil auf, daß die Alterungsbeständigkeit zu wünschen übrig läßt und daß die Verarbeitbarkeit, insbesondere die Fließfähigkeit und Homogenität, ungenügend ist.

Aufgaben der vorliegenden Erfindung war es, die erwähnten Nachteile zu vermeiden und eine Kabelisolierung für elektrische Kabel auf Basis von Ethylenpolymerisaten zu schaffen, die sowohl eine hohe Widerstandsfähigkeit gegenüber dem Entstehen oder dem Wachstum von Wasserbäumchen aufweisen als auch geringe dielektrische Verluste und eine hohe Alterungsbeständigkeit und außerdem eine gute Verarbeitbarkeit besitzen.

Diese Aufgaben wurden durch elektrische Kabel mit Kabelisolierungen gemäß eingangs aufgezeigten Zusammensetzung gelöst, wobei das Ethylencopolymerisat (II) ein Ionomer ist, in dem ein Teil der Carboxylgruppen bzw. Carbonsäureanhydridgruppen zu Ammoniumsalzen tertiärer Amine umgesetzt ist.

Bevorzugt ist die im Ethylencopolymerisat-Ionomer einpolymerisierte Carbonsäure bzw. das einpolymerisierte Carbonsäureanhydrid zu 2 bis 95 Mol.% zum Ammoniumsalz umgesetzt.

Besonders bevorzugt ist das Ammoniumsalz aus tertiären Alkyl- oder tertiären Hydroxyalkylaminen gebildet.

Elektrische Kabel und Isolierungen für elektrische Kabel und Leitungen aus Ethylenpolymerisaten sind wohlbekannt. Es ist wichtig, daß das Isoliermaterial verschiedene physikalische mechanische und elektrische Eigenschaften aufweist, um es für spezielle Anwendungen in der Kabelindustrie geeignet zu machen. Im vorliegenden Fall soll insbesondere die Widerstandsfähigkeit gegenüber der Bildung von Wasserbäumchen derart verbessert sein, daß bei Anwendung eines Ethylenpolymerisatmaterials mit technisch nicht vermeidbaren Gehalten an Verunreinigungen an wasserlöslichen Salzen unter Spannungsbelastung bei Wasser- oder Feuchtigkeitszutritt die Lebensdauer der Isolierung gegenüber nicht ausgerüstetem Material erhöht ist. Da die zulässige Leitertemperatur 90°C beträgt, soll gleichzeitig eine gute Alterungsbeständigkeit, d.h. eine langanhaltende Beständigkeit gegen thermische Oxidation und Abfall der mechanischen Eigenschaften gewährleistet sein.

Unter den Ethylenpolymerisaten (I) im Sinne der vorliegenden Erfindung sollen Ethylenhomo- und -copolymerisate verstanden werden, die sich von Ethylencopolymerisat (II) unterscheiden. Derartige Ethylenpolymerisate sind so bekannt, daß sich eine weitere Erläuterung erübrigt. Besonders geeignete Ethylenpolymerisate sind Polyethylene niederer Dichte (unter 0,934 g/cm³ nach DIN 53 479), Ethylencopolymerisate mit α-Olefinen, die 3 bis 8 C-Atome enthalten und deren Anteil 5 bis 15 Gewichtsprozent beträgt, Ethylen-Vinylacetat-Copolymerisate, bevorzugt mit 0,5 bis 8 Gewichtsprozent einpolymerisiertem Vinylacetat, Ethylen-Acrylsäureester-Copolymerisate, insbesondere Ethylen-Acrylsäureethyl-, n- oder tert-butyl- oder -ethylhexylacrylsäureester und ähnliche Ethylencopolymerisate außer den Ethylencopolymerisaten (II). Die Ethylenpolymerisate weisen im nicht vernetzten Zustand bevorzugt Schmelzindexwerte, gemessen nach ASTM-D 1238-70 bei 190°C und 2,16 kg Belastung von 0,2 bis 10 g/10 min und Dichten von 0,890 bis 0,934 g/cm³, gemessen nach DIN 53 479, auf. Statt der reinen Ethylenhomo- oder -copolymerisate sind auch Mischungen verschiedener Ethylenpolymerisate geeignet. Derartige Ethylenpolymerisate, deren Eigenschaften und Herstellung sind beispielsweise in den Publikationen "Ullmanns Encyklopädie der technischen Chemie", 4. Auflage, Band 19, Verlag Chemie GmbH, D-6940 Weinheim, 1980, Seiten 169 bis 195; "Kunststoffe" 67, (1977), Seiten 118 bis 121 und den US-Patenten 3 117 953 und 4 217 431 beschrieben. Die Ethylenpolymerisate können vernetzt oder unvernetzt sein, bevorzugt sind sie aber zu 50 bis 90 % entweder durch Peroxide oder energiereiche Strahlung vernetzt.

Die Ethylenpolymerisate (I) enthalten 0,5 bis 40, bevorzugt 5 bis 35, insbesondere 10 bis 30 Gewichtsprozent eines von (I) unterschiedlichen Ethylencopolymerisats (II), wobei sich die Gewichtsprozentzahlen auf das Gewicht des Ethylenpolymerisats (I) beziehen. Das Ethylencopolymerisat (II) wird mit dem Ethylenpolymerisat (I) in üblichen Mischern nach herkömmlichen Methoden gemischt.

Die Mischung aus Ethylenpolymerisat (I) und Ethylencopolymerisat (II) enthält noch übliche Zusatzstoffe in üblichen Mengen. Unter üblichen Zusatzstoffen sind insbesondere Antioxidantien, Flammschutzmittel, Vernetzungshilfsmittel wie Triallylcyanurat und Vernetzungsmittel wie organische Peroxide zu verstehen von 0,5 bis 3,0 Gewichtsprozent, bezogen auf die Mischung.

Das Ethylencopolymerisat (II) soll als Ionomeren vorliegen, das neben überwiegenden Mengen Ethylen eine C₃- bis C₆-Alkencarbonsäure oder eine C₄- bis C₆-Alkendicarbonsäure oder ein C₄- bis C₆-Dicarbonsäureanhydrid einpolymerisiert enthält, wobei ein Teil der Carboxylgruppen bzw. Carbonsäureanhydridgruppen zu Ammoniumsalzen tertiärer Amine umgesetzt ist. Ethylencopolymerisat-Ionomere sind an sich bekannt, und beispielsweise beschrieben in der Ullmann's Encyklopädie der technischen Chemie, 4. Auflage, Band 15, (1978), Seiten 426 bis 428 oder in der Encyclopedia of Polymer Science and Engineering, 2. Auflage, Band 8, (1987), Seiten 393 bis 423. Bei der Herstellung der bekannten Ionomeren werden die freien Carboxylgruppen des Ethylen-C₃- bis C₆-Alkencarbonsäure- bzw. des Ethylen-C₄- bis C₆-Alkendicarbonsäure- bzw. des Ethylen-C₄- bis C₆-Alkendicarbonsäureanhydrid-Copolymerisats mit entsprechenden Verbindungen zu Carboxylatgruppen umgesetzt. Die zur Umsetzung gelangenden carboxylgruppenhaltigen Ethylencopolymerisate (II) sind so bekannt, daß sich eine ausführliche Beschreibung erübrigt (vgl. z. B. die EP-A-0 248 148). Die Ethylencopolymerisate (II) enthalten im allgemeinen 50 bis 90 Mol-Teile Ethylen einpolymerisiert.

Bevorzugt besteht das Ausgangspolymerisat für das Ethylencopolymerisat-Ionomer aus 100 Mol-Teilen einpolymerisiertem Ethylen, 1 bis 6 Mol-Teilen einpolymerisierter Alken(di)carbonsäure(anhydrid) und 0 bis 5,5 Mol-Teilen einpolymerisiertem C₁- bis C₈-Alkylester einer C₃- bis C₆-Alkencarbonsäure.

Insbesondere ist im Ethylencopolymerisat-Ionomer Acrylsäure oder Maleinsäureanhydrid einpolymerisiert.

Besonders bevorzugt ist eine Kabelisolierung bei dem das Ethylencopolymerisat-Ionomer einen Schmelzindex, gemessen bei. 190°C und 2,16 kp Belastung nach DIN 53735, von 0,2 bis 20 g/10 min hat.

Insbesondere bevorzugt sind die ungesättigten Carbonsäuren bzw. Carbonsäureanhydride im Ethylencopolymerisat-Ionomer pfropfcopolymerisiert.

Auch die erfindungsgemäß zu verwendenden speziellen Ethylencopolymerisat-Ionomeren, bei denen ein Teil der Carboxylgruppen bzw. Carbonsäureanhydridgruppen des Ethylencopolymerisats (II) zu Ammoniumsalzen tertiärer Amine umgesetzt ist, sind aus der Literatur wohl bekannt (vgl. z.B. die US-Patent 34 04 134, 34 71 460, 35 41 033 oder 37 90 521). Die Ethylencopolymerisat-Ionomeren werden dadurch erhalten, daß man zunächst ein Copolymerisat aus Ethylen und einer α,β-ethylenisch ungesättigten Carbonsäure, z.B. gemäß US-Patenten 3520861, 3201374 oder 3350372, herstellt und dieses Copolymerisat mit einem tertiären Amin in einen zweiten gesonderten Reaktionsschritt, z.B. einem Extruder, umsetzt. Die Ethylencopolymerisat-Ionomeren können aber auch direkt durch Copolymerisation von Ethylen mit α,β-ungesättigten Carbonsäuren oder Carbonsäureanhydriden in einem Polymerisationssystem bei Drücken von 500 bis 5000 bar und Temperaturen von 40 bis 350°C in Anwesenheit eines radikalisch zerfallenden Polymerisationsinitiators und in Gegenwart eines tertiären organischen Amins hergestellt werden (vgl. gleichrangige deutsche Patentanmeldung P 38 30 007.9).

In den Ethylencopolymerisat-Ionomeren liegt ein Teil der Carboxylgruppen bzw. Carbonsäureanhydridgruppen als freie Carboxylgruppen bzw. Carbonsäureanhydridgruppen vor, der Rest ist mit Ammoniumionen der tertiären Amine gebunden. Unter einem Teil wird dabei üblicherweise ein Gehalt von 2 bis 50 Mol.% verstanden.

Bevorzugt besteht das Ausgangspolymerisat für das Ethylencopolymerisat-Ionomer aus 100 Mol-Teilen einpolymerisiertem Ethylen, 1 bis 6 Mol-Teilen einpolymerisierter Alken(di)carbonsäure(anhydrid) und 0 bis 5,5 Mol-Teilen einpolymerisiertem C₁- bis C₈-Alkylester einer C₃- bis C₆-Alkencarbonsäure. Derartige Co- bzw. Terpolymerisate des Ethylens sind in der EP-A-0 248 148 beschrieben. Insbesondere bevorzugt als einpolymerisierte Carbonsäure bzw. einpolymerisiertes Carbonsäureanhydrid sind Acrylsäure und Maleinsäureanhydrid.

Bevorzugt sind elektrische Kabel enthaltend eine Kabelisoliermasse, bei denen die im Ethylencopolymerisat-Ionomer einpolymerisierte Carbonsäure bzw. das einpolymerisierte Carbonsäureanhydrid zu 2 bis 95, insbesondere 10 bis 60 Mol.% zum Ammoniumsalz umgesetzt ist.

Ein besonders bevorzugtes Ammoniumkation im Ethylencopolymerisat-Ionomer ist das Triethanolammonium- und das Tri-n-hexylammoniumkation. Geeignet sind aber auch tertiäre aliphatische Amine mit einem gesättigten C₁- bis C₁₂-Kohlenwasserstoffrest, insbesonderem einem C₄- bis C₁₀-Kohlenwasserstoffrest wie Tri-nbutylamin, Tri-isobutylamin, Tri-noctylamin oder Tri-ndecylamin sowie tertiäre aliphatische Amine mit einem gesättigten C₁- bis C₈-Alkoxy-Kohlenwasserstoffrest, insbesondere einem C₂- bis C₆-Alkoxy-Kohlenwasserstoffrest, wie Tri-butanolamin, Tri-isobutanolamin, Tri-propanolamin oder Tri-nhexanolamin.

Es ist ein Vorteil, wenn das Ethylencopolymerisat-Ionomer (II) einen Schmelzindex, gemessen bei 190°C und 2,16 kp Belastung nach DIN 53735, von 0,2 bis 20 g/10 min hat.

Bevorzugt ist auch ein elektrisches Kabel enthaltend eine Kabelmischung bei dem im Ethylencopolymerisat-Ionomer die ungesättigte Carbonsäure bzw. das ungesättigte Carbonsäureanhydrid pfropfcopolymerisiert ist. Derartige Propfcopolymerisate und deren Herstellung zu Ethylencopolymerisat-Ionomeren sind z.B. aus den US-Patenten 3 264 272 und 3 437 718 bekannt.

Die mit der Erfindung erzielbaren Vorteile sind insbesondere darin zu sehen, daß ein Kabel mit einem Kabelisoliermaterial auf Basis von Ethylenpolymerisaten zur Verfügung gestellt wird, wobei sowohl das Entstehen oder Wachsen von Wasserbäumchen inhibiert ist als auch geringe dielektrische Verluste, hohe Alterungsbeständigkeit und gute Bearbeitbarkeit zu verzeichnen sind.

### Beispiele

### Herstellung eines Ethylencopolymerisat-Ionomers

Die Copolymerisation wurde in allen Fällen in einem rohrförmigen Reaktor mit einem Längen-/Durchmesser-Verhältnis von etwa 25.000 durchgeführt. Zur Abführung der Polymerisationswärme wurden die Rohrwände von außen mit Wasser gekühlt. Die Ethlyen/Amin/Carbonsäure-Mischung wurde mit dem Molgewichtsregler (Propionaldehyd) versetzt, auf den Reaktionsdruck komprimiert und der Einlaßstelle des Reaktors zugeführt. Zusätzlich wurde an der Einlaßstelle des Reaktors eine Lösung von tert.-Butylperoxypivalat und tert.-Butylperisononanoat in Verdünnungsmittel (Benzin) dazugegeben.

### Beispiel 1

5,1 l/h Acrylsäure und 2,7 l/h Tri-n-hexylamin wurden zusammen mit 2,3 t/h Ethylen auf die Saugseite eines Hochdrucknachverdichters dosiert, auf den Reaktionsdruck von 2800 bar komprimiert und auf 145°C erwärmt. An der Einlaßstelle des Rohrreaktors wurde 1,3 ppm/h tert. -Butylperpivalat 1,1 ppm/h tert.-Butylperisononanoat, bezogen auf das eingesetzte Ethylen eingespritzt und die Copolymerisation initiiert. Das Temperaturmaximum betrug 250°C. Das entstandene Copolymerisat-Ionomer wurde über die üblichen Abscheidersysteme vom nicht umgesetzten Ethylen abgetrennt und über einen einfachen Einwellenextruder KE 150 der Firma Berstorff ausgetragen. Das Produkt ist sehr homogen und vollkommen farblos.

### Beispiel 2

10,2 l/h Acrylsäure und 5,4 l/h Tri-ethanolamin wurden zusammen mit 2,3 t/h Ethylen auf die Saugseite eines Hochdrucknachverdichters dosiert, auf den Reaktionsdruck von 2800 bar komprimiert und auf 145°C erwärmt. An der Einlaßstelle des Rohrreaktors wurde 1,5 ppm/h tert. -Butylperpivalat 1,3 ppm/h tert.-Butylperisononanoat, wurde 1,5 ppm/h tert.-Butylperpivalat, 1,3 ppm/h tert. -Butylperisononanoat, bezogen auf das eingesetzte Ethylen, eingespritzt und die Copolymerisation initiiert. Das Temperaturmaximum betrug 250°C. Das entstandene Copolymerisat-Ionomer wurde über die üblichen Abscheidersysteme vom nicht umgesetzten Ethylen abgetrennt und über einen einfachen Einwellenextruder KE 150 der Firma Berstorff ausgetragen. Das Produkt ist sehr homogen und vollkommen farblos.

### Vergleichsbeispiel A

Polyethylen niederer Dichte des Schmelzindex von 2 g/10 min und einer Dichte von 0.918 g/cm³ wird mit einem Ionomeren bestehend aus 92 Gew.% Ethylen und 8 Gew.% Acrylsäure (AA), deren Carboxylgruppen zu 30 % mit Zn²⁺ neutralisiert sind, derart gemischt, daß die Mischung 0,4 Gew.% Acrylsäure entält. Die Mischung wird mit 0,3 Gew.% 4,4′-Thiobis(6-tertiärbutyl-3-methyl-phenol) als Wärmestabilisator und 1,8 Gew.% Dicumylperoxid als Vernetzer ausgerüstet.

Bei der Prüfung auf water-tree wird Kochsalz in Form kleiner Kristalle (Kantenlänge 10 µm) fein verteilt als Schicht in das Polyethylen eingebracht. Dies geschieht, indem das Salz auf die unvernetzte Platte aufgestäubt, danach eine zweite ebensolche Platte aufgelegt und dieses Sandwich bei 200°C 10 min auf eine Dicke von 1 mm gepreßt wird. Dabei wird das Polyethylen vernetzt.

Danach werden die Proben bei 100 %iger Luftfeuchtigkeit mit einer Feldstärke von 2,5 kV/mm belastet.

Nach der elektrischen Belastung werden unter einem Lichtmikroskop die Anzahl, die Länge und die Struktur der entstandenen water trees in den einzelnen Proben festgestellt. Die Feststellung der Zahl der water trees geschieht im Strahlengang parallel zur Richtung des elektrischen Feldes, in dem die Belastung erfolgte.

Die Zahl der gebildeten water trees wird auf die Zahl der NaCl-Kristalle bezogen und als Menge in Gew.% in der Tabelle angegeben. Die Länge der water trees wird an ca. 0,5 mm dicken Schnitten durch die Probe ermittelt, wobei die Blickrichtung senkrecht zu der des elektrischen Feldes steht.

Die dielektrischen Verluste (tangδ) werden an 1 mm dicken Preßplatten bei 23°C und 80°C und einer Frequenz von 60 Hz bestimmt.

Die Widerstandsfähigkeit gegenüber thermisch oxidativer Alterung wird an 1 mm dicken vernetzten Preßplatten bestimmt. Die Alterung erfolgt bei 150°C im Umluft-Trockenschrank. Die Alterungsstabilität wird als Zeit in Tagen angegeben nach der das Material deutliche versprödete Bereiche, die sich nicht mehr verstrecken lassen, aufweist. Zur Erfüllung einschlägiger Normen müssen Isoliermassen mindestens noch nach 10 Tagen im Zugversuch bei Raumtemperatur verstreckbar sein.

Die Ergebnisse der einzelnen Prüfungen sind in der Tabelle zusammengefaßt.

### Vergleichsbeispiel B

Es wird verfahren wie in Vergleichsbeispiel A, aber bis zu 30 % mit Na⁺ neutralisiert.

### Beispiel 3

Es wird verfahren wie in Vergleichsbespiel A, aber bis zu 10 % mit Tri-n-hexylamin neutralisiert.

### Beispiel 4

Es wird verfahren wie in Vergleichsbeispiel A, aber bis zu 15 % mit Tri-ethanolamin neutralisiert.

| Beispiele | Mischung Gew.% | | water tree % nach 90 d | Alterungsstabilität | tangδ (20°C) 10⁴ |
|---|---|---|---|---|---|
| | LDPE | AA | | | |
| A | 99.6 | 0.4 ¹) | 0 | 4 | 2 |
| B | 99.6 | 0.4 ²) | 0 | 3 | 3 |
| 3 | 99.6 | 0.4 ³) | 0 | 14 | 2 |
| 4 | 99.6 | 0.4 ⁴) | 0 | 20 | 2 |
| LDPE = Low Density Polyethylen AA = Acrylsäure | | | | | |

| | | | | | |
|---|---|---|---|---|---|
| ¹) = AA zu 30 % neutralisiert mit Zn²⁺ | | | | | |
| ²) = AA zu 30 % neutralisiert mit Na⁺ | | | | | |
| ³) = AA zu 10 % neutralisiert mit Tri-nhexylamin | | | | | |
| ⁴) = AA zu 15 % neutralisiert mit Tri-ethanolamin | | | | | |

## Patentansprüche

1. Elektrisches Kabel, enthaltend eine Kabelisolierung mit hoher Widerstandsfähigkeit gegenüber dem Entstehen oder dem Wachstum von Wasserbäumchen (water trees) und mit hoher Alterungsbeständigkeit bestehend aus einem Ethylenpolymerisat (I) und 0,5 bis 40 Gew.%, bezogen auf das Ethylenpolymerisat (I), eines von (I) unterschiedlichen Ethylencopolymerisats (II), das neben überwiegenden Mengen Ethylen eine C₃- bis C₆-Alkencarbonsäure oder eine C₄- bis C₆-Alkendicarbonsäure bzw. ein -dicarbonsäureanhydrid einpolymerisiert enthält und üblichen Zusatzstoffen in üblichen Mengen, dadurch gekennzeichnet, daß das Ethylencopolymerisat (II) ein Ionomer ist, in dem ein Teil der Carboxylgruppen bzw. Carbonsäureanhydridgruppen zu Ammoniumsalzen tertiärer Amine umgesetzt ist.

2. Elektrisches Kabel, enthaltend eine Kabelisolierung nach Anspruch 1, dadurch gekennzeichnet, daß die im Ethylencopolymerisat-Ionomer einpolymerisierte Carbonsäure bzw. das einpolymerisierte Carbonsäureanhydrid zu 2 bis 95 Mol.% zum Ammoniumsalz umgesetzt ist.

3. Elektrisches Kabel, enthaltend eine Kabelisolierung nach Anspruch 1, dadurch gekennzeichnet, daß das Ammoniumsalz aus tertiären Alkyl- oder tertiären Hydroxyalkylaminen gebildet ist.

## Claims

1. An electric cable containing a cable insulation having high resistance to the formation or growth of water trees and having high aging resistance and consisting of an ethylene polymer (I) and from 0.5 to 40% by weight, based on the ethylene copolymer (I), of an ethylene copolymer (II) which differs from (I) and contains, in addition to predominant amounts of ethylene, a C₃-C₆-alkenecarboxylic acid or a C₄-C₆-alkenedicarboxylic acid or -dicarboxylic anhydride as copolymerized units and conventional additives in the usual amounts, wherein the ethylene copolymer (II) is an ionomer in which some of the carboxylic groups or carboxylic anhydride groups have been converted into ammonium salts of tertiary amines.

2. An electric cable containing a cable insulation as claimed in claim 1, wherein from 2 to 95 mol % of the carboxylic acid copolymerized in the ethylene copolymer ionomer or of the copolymerized carboxylic anhydride have been converted into the ammonium salt.

3. An electric cable containing a cable insulation as claimed in claim 1, wherein the ammonium salt is formed from a tertiary alkylamine or tertiary hydroxyalkylamine.

## Revendications

1. Câbles électriques, contenant une isolation qui présente une résistance élevée à la formation ou au développement d'arborescences aqueuses (water trees) et une grande stabilité au vieillissement, constituée par un polymère d'éthylène (I), par 0,5 à 40% en poids, par rapport au polymère d'éthylène (I), d'un copolymère d'éthylène (II) qui est différent de (I) et qui contient en liaison polymère, en dehors de quantités prépondérantes d'éthylène, un acide (alcène en C₃-C₆)-carboxylique ou un acide ou anhydride (alcène en C₄-C₆)-dicarboxylique, et par des additifs usuels dans les proportions habituelles, caractérisés en ce que le copolymère d'éthylène (II) est un ionomère dans lequel une partie des groupements carboxyle ou des groupements anhydride carboxylique est transformée en sels ammoniques d'amines tertiaires.

2. Câbles électriques contenant une isolation selon la revendication 1, caractérisés en ce que l'acide carboxylique ou l'anhydride carboxylique contenu en liaison polymère dans le copolymère d'éthylène ionomère est transformé en le sel ammonique à raison de 2 à 95% en moles.

3. Câbles électriques contenant une isolation selon la revendication 1, caractérisés en ce que le sel ammonique est forme à partir d'alkylamines tertiaires ou d'hydroxyalkylamines tertiaires.
